# EUROPÄISCHE PATENTSCHRIFT

(11) **EP 3 566 985 B1**
(45) Veröffentlichungstag und Bekanntmachung des Hinweises auf die Patenterteilung: **15.03.2023**
(21) Anmeldenummer: 19168049.5
(22) Anmeldetag: 09.04.2019
(51) Int. Cl.: B65G 59/10

(54) **TRAYABSTAPELVORRICHTUNG MIT ENTLASTUNGSEINRICHTUNG**
TRAY STACKING DEVICE WITH UNLOADING MEANS
DISPOSITIF D'EMPILEMENT DE PLATEAUX POURVU D'UN MOYEN DE DÉCHARGE

(30) Priorität: 11.05.2018 DE 102018111285
(43) Veröffentlichungstag der Anmeldung: 13.11.2019
(73) Patentinhaber: MULTIVAC Sepp Haggenmüller SE & Co. KG, 87787 Wolfertschwenden (DE)
(72) Erfinder: FICKLER, Bernhard, 87749 Hawangen (DE); NEGELE, Wolfgang, 87724 Ottobeuren (DE)
(74) Vertreter: Grünecker Patent- und Rechtsanwälte PartG mbB

(56) Entgegenhaltungen:
- EP-A2- 1 275 604
- JP-A- H1 159 907
- JP-A- 2003 252 436
- JP-U- S60 177 121
- US-A- 3 677 439

## Beschreibung

Die Erfindung betrifft eine Abstapelvorrichtung zum Abstapeln von Trays aus einem Traystapel, welche beispielsweise in Verpackungsmaschinen einsetzbar ist.

Als "Trays" werden schalenartige Gegenstände bezeichnet, wie sie oftmals zur Verpackung von Produkten, insbesondere Lebensmittelprodukten, verwendet werden. Trays werden oftmals aus Kunststofffolien oder anderem Folienmaterialien hergestellt. Ein Tray kann eine oder mehrere muldenartige Vertiefungen zur Aufnahme von Produkten umfassen. Leere Trays werden einer Verpackungsmaschine effizienterweise ineinander gestapelt als Traystapel zugeführt. Bevor Trays aus einem solchen Traystapel von der Verpackungsmaschine verarbeitet werden können, müssen sie vereinzelt bzw. abgestapelt werden.

Aus der EP 1 275 604 A2 ist eine Abstapelvorrichtung zum Abstapeln von ineinander gestapelten Blisterverpackungen bekannt. Die Abstapelvorrichtung umfasst ein Greifmittel, welches jeweils die unterste Blisterverpackung des Stapels greift und abstapelt. Um Fehlfunktionen zu vermeiden, wird beim Abstapeln durch das Greifmittel das Gewicht eines oberen Teils des Blisterstapels zur Entlastung von Rückhaltemitteln getragen. Die Rückhaltemittel weisen ein Messer auf, das zwischen einer Freigabeposition und einer Halteposition bewegbar ist. In der Freigabeposition ist das Messer eingefahren und kommt nicht mit dem Blisterstapel in Berührung. Beim Verfahren in die Halteposition wird das Messer zunächst horizontal in Richtung auf den Blisterstapel hin ausgefahren, so dass es in Eingriff mit den Blisterverpackungen auf einer gewissen Höhe des Blisterstapels kommt. Dann wird das Messer entlang einer vertikalen Richtung angehoben. So wird der Blisterstapel zusätzlich zu der haltenden Wirkung des Messers auch noch auseinandergezogen. Um das Anheben entlang der vertikalen Richtung zu ermöglichen, ist das Messer in einem vertikal verschiebbaren Schlitten gelagert. Mittels eines Kniehebel-Mechanismus kann das Messer horizontal aus dem Schlitten ausgefahren werden, um in Eingriff mit dem Blisterstapel zu gelangen.

Diese Konstruktion ist relativ aufwändig, da mehrere Elemente zueinander beweglich gelagert werden. Insbesondere muss der Schlitten vertikal beweglich gelagert sein und das Messer muss in dem Schlitten horizontal beweglich gelagert sein. Die Konstruktion nimmt zudem entlang der Ausfahrrichtung des Messers viel Platz ein, da der Kniehebel-Mechanismus hinter dem Messer vorgesehen sein muss.

Aus der EP 3 187 442 A1 ist eine Abstapelvorrichtung zum Abstapeln von Trays aus einem Traystapel bekannt. Die Abstapelvorrichtung umfasst eine Trayentlastungsvorrichtung mit entlang einer horizontalen Richtung ausfahrbaren Rückhalteelementen zum Halten eines oberen Teils des Traystapels. Die Rückhaltelemente sind mittels einer Feder in Richtung auf ihre Halteposition hin vorgespannt. Mittels einer Nockenanordnung können die Halteelemente entgegen der Vorspannung von dem Traystapel weg in eine Freigabeposition verfahren werden. Da die Feder, die Halteelemente und die Nockenanordnung entlang der Ausfahrrichtung der Halteelemente hintereinander angeordnet sind, liegt entlang der Ausfahrrichtung der Halteelemente ein hoher Platzbedarf vor.

Die US 3,677,439 A beschreibt eine Vorrichtung zum Abstapeln von Eierkartons. Auf beiden Seiten einer Stapelaufnahme ist jeweils eine Gleitanordnung vorgesehen, welche einen vertikalen Gleitweg für Kurvenplatten und eine Öffnung ins Innere der Stapelaufnahme bereitstellen. Die Kurvenplatten sind schwenkbar mit einer Antriebsstange verbunden, um die Kurvenplatten vertikal auf und ab zu bewegen. Gleitelemente weisen in Kurven der Kurvenplatten aufgenommene Pins auf und werden aufgrund der Bewegung der Kurvenplatten auf den Stapel zu oder von dem Stapel weg bewegt und kommen dabei wahlweise mit dem Stapel in stützenden Eingriff. Die US 3 677 439 A offenbart eine Abstapelvorrichtung nach dem Oberbegriff des Anspruchs 1.

Es ist Aufgabe der Erfindung, mit konstruktiv einfachen Mitteln eine Abstapelvorrichtung zum Abstapeln von Trays aus einem Traystapel mit einer Entlastungseinrichtung für den Traystapel bereitzustellen, die in Bezug auf ihren Platzbedarf verbessert ist.

Diese Aufgabe wird durch den Gegenstand von Anspruch 1 gelöst. Die abhängigen Ansprüche geben vorteilhafte Ausführungsformen der Erfindung an.

Es wird eine Abstapelvorrichtung zum Abstapeln von Trays aus einem Traystapel bereitgestellt. Die Abstapelvorrichtung umfasst eine Vertikalführung zum Aufnehmen eines Traystapels und eine Trenneinrichtung zum einzelnen Abstapeln des jeweils untersten Trays eines in der Vertikalführung aufgenommenen Traystapels. Zudem umfasst die Abstapelvorrichtung eine Entlastungseinrichtung mit einem Halteelement und einer Antriebseinrichtung. Die Antriebseinrichtung ist dazu konfiguriert, das Halteelement zwischen einer Halteposition und einer Freigabeposition zu verfahren. In der Halteposition hält das Halteelement einen Teil eines in der Vertikalführung aufgenommenen Traystapels. In der Freigabeposition gibt das Halteelement den Traystapel frei. Wenn in der Halteposition des Halteelements der Teil des Traystapels gehalten wird, wird ein darunterliegender Teil des Traystapels entlastet, wodurch die Fehleranfälligkeit des Abstapelns des jeweils untersten Trays durch die Trenneinrichtung verringert wird. Die Antriebseinrichtung ist zur Kraftübertragung auf das Halteelement zum Verfahren des Halteelements schwenkbar mit dem Halteelement verbunden. Das Halteelement kann dann auch einem komplizierten Verfahrweg folgen.

Der Verfahrweg des Halteelements zwischen der Halteposition und der Freigabeposition ist durch eine Kulissenführung definiert. Durch den Einsatz einer Kulissenführung lässt sich der Verfahrweg zwischen der Halteposition und der Freigabeposition auf konstruktiv einfache Weise relativ frei gestalten und gut an die jeweilige Geometrie der Abstapelvorrichtung und die abzustapelnden Trays anpassen. Die Kulissenführung ermöglicht ein bedarfsgemäßes Umlenken der von der Antriebseinrichtung bereitgestellten Antriebskraft, so dass sich die Antriebseinrichtung relativ frei positionieren lässt und somit gut in vorhandenen Bauraum integrierbar ist. Durch den Einsatz der Kulissenführung lässt sich auch ein komplizierter Verfahrweg auf konstruktiv einfache Art und Weise realisieren. Die Kulissenführung umfasst zwei Kulissen, in denen jeweils ein horizontaler Bolzen geführt ist. Hierdurch lässt sich der Verfahrweg auf einfache Art eindeutig festlegen.

Die Antriebseinrichtung kann dazu konfiguriert sein, zum Verfahren des Halteelements zwischen der Halteposition und der Freigabeposition eine entlang einer zumindest im Wesentlichen vertikalen Richtung wirkende Kraft auf das Halteelement auszuüben. So lässt sich der Platzbedarf für die Entlastungseinrichtung insbesondere entlang horizontaler Richtungen verringern. Besonders vorteilhaft ist eine zumindest im Wesentlichen in einer vertikalen Richtung wirkende Kraft der Antriebseinrichtung, wenn der Verfahrweg des Halteelements eine vertikale Komponente umfasst, da dann die Kraftübertragung in der vertikalen Bewegungskomponente besonders effizient ist.

Die Antriebseinrichtung und das Halteelement können übereinander angeordnet sein. Auf diese Art und Weise kann die Entlastungseinrichtung besonders schmal konstruiert werden, was insbesondere dann von Vorteil ist, wenn mehrere Abstapelvorrichtungen nebeneinander angeordnet werden sollen, beispielsweise um mehrere Produktionslinien einer Verpackungsmaschine gleichzeitig mit Trays zu versorgen.

Die Antriebseinrichtung kann ein längenveränderliches Element aufweisen, das insbesondere als Pneumatikzylinder oder Elektrolinearzylinder ausgebildet sein kann. Durch ein längenveränderliches Element kann eine besonders gute und zuverlässige Kraftübertragung erreicht werden. Vorzugsweise erstreckt sich das längenveränderliche Element im Wesentlichen in einer vertikalen Richtung als Längsrichtung, so dass die Entlastungseinrichtung schmal gebaut werden kann.

Die Kulissenführung kann derart ausgebildet sein, dass der Verfahrweg des Halteelements aus der Freigabeposition in die Halteposition eine Bewegung auf eine vertikale Mittelachse der Vertikalführung hin umfasst. Mit dieser Bewegung kann das Halteelement in Eingriff mit dem Traystapel, insbesondere in Eingriff mit Flanschbereichen einzelner Trays, gebracht werden. Vorzugsweise umfasst der Verfahrweg des Halteelements aus der Freigabeposition in die Halteposition zudem eine Bewegung entlang einer vertikalen Richtung nach oben. Dies erlaubt ein Anheben eines oberen Teils des Traystapels, um die unteren Trays zum Abstapeln durch die Trenneinrichtung weiter zu entlasten. Die Bewegung auf die vertikale Mittelachse der Vertikalführung hin und die Bewegung entlang der vertikalen Richtung nach oben müssen nicht strikt getrennt sein. Es ist denkbar, dass der Verfahrweg zumindest Bereiche enthält, in denen die Bewegungsrichtung sowohl eine horizontale Komponente in Richtung auf die vertikale Mittelachse der Vertikalführung hin, als auch eine horizontale Komponente nach oben hin umfasst.

Die Kulissenführung kann derart ausgebildet sein, dass sich das Halteelement bei einem Verfahren aus der Freigabeposition in die Halteposition zunächst hauptsächlich auf eine vertikale Mittelachse der Vertikalführung hin zubewegt und anschließend hauptsächlich entlang einer vertikalen Richtung nach oben bewegt. Das Halteelement wird somit zunächst ausgefahren, um in Eingriff mit dem Traystapel zu kommen, und dann angehoben, um einen oberen Teil des Traystapels anzuheben und so die darunterliegenden Trays zu entlasten und den Traystapel auseinander zu ziehen. Das seitliche Ausfahren des Halteelements und das Anheben des Traystapels müssen nicht strikt getrennt sein. Beispielsweise kann das Halteelement auch noch weiter ausgefahren werden, während der Traystapel bereits angehoben wird.

Die beiden Kulissen der Kulissenführung können einen gleichen Formverlauf aufweisen.

Gemäß einer denkbaren Variante sind die Kulissen an dem Halteelement vorgesehen oder angebracht, während die Bolzen an einem Gestell der Abstapelvorrichtung angebracht sind. Alternativ kann der Bolzen an dem Halteelement vorgesehen oder angebracht sein, während die Kulissen mit dem Gestell der Abstapelvorrichtung verbunden sind. Das Gestell der Abstapelvorrichtung kann ortsfest oder gegenüber anderen Komponenten der Abstapelvorrichtung verstellbar sein. Wenn das Gestell gegenüber anderen Komponenten der Abstapelvorrichtung verstellbar ist, kann die Lage des Verstellwegs des Halteelements an der Abstapelvorrichtung insgesamt angepasst werden, beispielsweise um die Abstapelvorrichtung an die Art der zu verarbeitenden Trays anzupassen.

Das Haltelement kann ein gezacktes oder mit einem oder mehreren Vorsprüngen versehenes Eingriffselement umfassen, das dazu ausgelegt ist, mit Flanschen der Trays des Tray-stapels in haltenden Eingriff zu kommen. Für einen haltenden Eingriff ist es ausreichend, wenn der Flansch eines Trays auf dem Halteelement aufliegt. Ein klammerndes oder umgreifendes Halten wäre denkbar, ist aber nicht notwendig.

Vorzugsweise ist das Eingriffselement lösbar an einem Hauptkörper des Halteelements angebracht. So kann das Eingriffselement zum Erneuern des Halteelements oder zum Anpassen an die Art der abzustapelnden Trays schnell und einfach ausgetauscht werden.

Gemäß einer bevorzugten Ausführungsform ist die Abstapelvorrichtung als wenigstens zweispurige Abstapelvorrichtung ausgebildet. Diese kann zusätzlich zu den bereits beschriebenen Komponenten eine zweite Vertikalführung zum Aufnehmen eines zweiten Traystapels, eine zweite Trenneinrichtung, die zum einzelnen Abstapeln des jeweils untersten Trays eines in der zweiten Vertikalführung aufgenommenen Traystapels konfiguriert ist, und eine zweite Entlastungseinrichtung umfassen. Die zweite Entlastungseinrichtung umfasst ein zweites Halteelement. Die Antriebseinrichtung ist dazu konfiguriert, das zweite Haltelement zwischen einer Halteposition und einer Freigabeposition zu verfahren. In der Halteposition hält das zweite Halteelement einen Teil eines in der zweiten Vertikalführung aufgenommenen Traystapels. In der Freigabeposition gibt das zweite Halteelement den Traystapel frei. Der Verfahrweg des zweiten Halteelements zwischen der Halteposition und der Freigabeposition ist durch eine zweite Kulissenführung definiert. Die zweite Vertikalführung, die zweite Trenneinrichtung und die zweite Entlastungseinrichtung können analog zu der oben beschriebenen Vertikalführung, Trenneinrichtung und Entlastungseinrichtung ausgebildet sein.

Die beiden Entlastungseinrichtungen einer wenigstens zweispurigen Abstapelvorrichtung sind vorzugsweise in einer Mittenführung angeordnet, die jeweils einen Teil bei Vertikalführungen bildet. Bei einer solchen Anordnung ist es besonders vorteilhaft, wenn die Entlastungseinrichtungen schmal gebaut werden können, da dann auch die Mittenführung schmal ausgebildet werden kann und die beiden Traystapel nahe nebeneinander abgestapelt werden können.

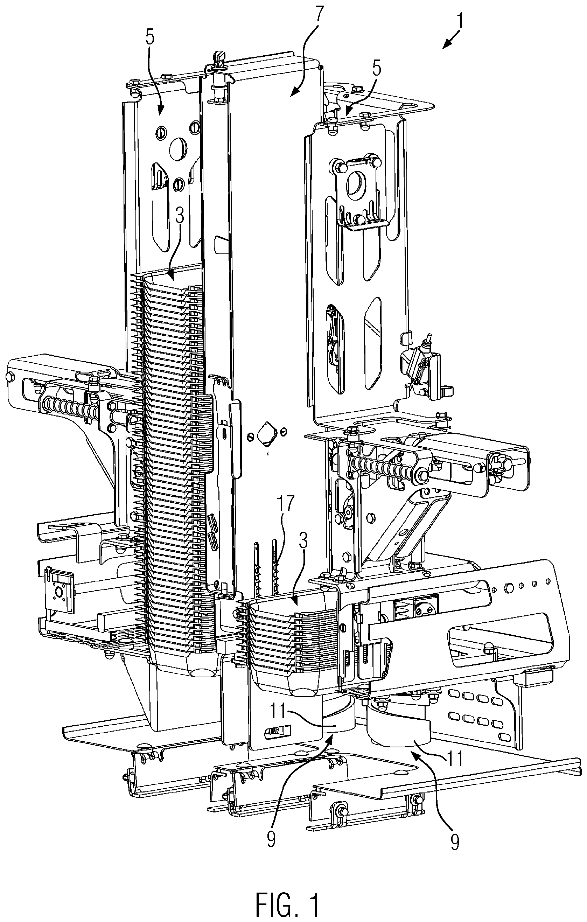

Im Folgenden wird die Erfindung anhand von Ausführungsbeispielen unter Bezugnahme auf die beigefügten Figuren weiter erläutert. Dabei zeigt
- Figur 1: eine schematische Perspektivansicht einer zweispurigen Abstapelvorrichtung gemäß einer Ausführungsform;
- Figur 2: eine schematische Perspektivansicht auf die Mittenführung der Abstapelvorrichtung mit den Entlastungseinrichtungen gemäß einer Ausführungsform der Erfindung;
- Figur 3A: eine schematische Frontansicht auf die Mittenführung der Abstapelvorrichtung mit den darin angeordneten Entlastungseinrichtungen in der Freigabeposition der Entlastungseinrichtungen;
- Figur 3B: eine schematische Frontansicht auf die Mittenführung der Abstapelvorrichtung mit den darin angeordneten Entlastungseinrichtungen in der Halteposition der Entlastungseinrichtungen;
- Figur 4A: eine schematische Darstellung einer Entlastungseinrichtung der Abstapelvorrichtung in der Freigabeposition gemäß der Ausführungsform der Erfindung;
- Figur 4B: eine schematische Darstellung einer Entlastungseinrichtung der Abstapelvorrichtung in der Halteposition gemäß der Ausführungsform der Erfindung; und
- Figur 5: eine schematische Frontansicht auf die Mittenführung mit darin angeordneten Entlastungseinrichtungen gemäß eines nicht beanspruchten Beispiels.

Die Figuren zeigen eine Abstapelvorrichtung 1 zum Abstapeln von Trays aus einem Traystapel 3 in einer als zweispurige Abstapelvorrichtung 1 ausgebildeten Ausführungsform. Das heißt, dass mit der gezeigten Abstapelvorrichtung 1 zwei nebeneinander angeordnete Tray-stapel 3 gleichzeitig abgestapelt werden können. Die Erfindung ist aber nicht auf eine solche Ausführungsform beschränkt und kann auch auf eine einspurige Abstapelvorrichtung 1 oder eine Abstapelvorrichtung 1 mit mehr als zwei Spuren angewandt werden. Die Abstapelvorrichtung 1 könnte beispielsweise als Teil einer Verpackungsmaschine zum Verpacken von Produkten, insbesondere Lebensmittelprodukten, in Trays eingesetzt werden.

Die Abstapelvorrichtung 1 umfasst zwei nebeneinander angeordnete Vertikalführungen 5, die jeweils einen Traystapel 3 aufnehmen. Die Vertikalführungen 5 sind durch eine Mittenführung 7 voneinander getrennt, die jeweils einen Teil der beiden Vertikalführungen 5 bildet.

Jeder der beiden Vertikalführungen 5 ist eine Trenneinrichtung 9 zum einzelnen Abstapeln des jeweils untersten Trays des in der Vertikalführung 5 aufgenommenen Traystapels 3 zugeordnet. Die Trenneinrichtungen 9 können beispielsweise jeweils mehrere Entstaplerschrauben 11 aufweisen. Es wäre aber auch denkbar, die Trenneinrichtungen 9 anderweitig auszubilden, beispielsweise als Greifvorrichtungen zum einzelnen Entstapeln des jeweils untersten Trays.

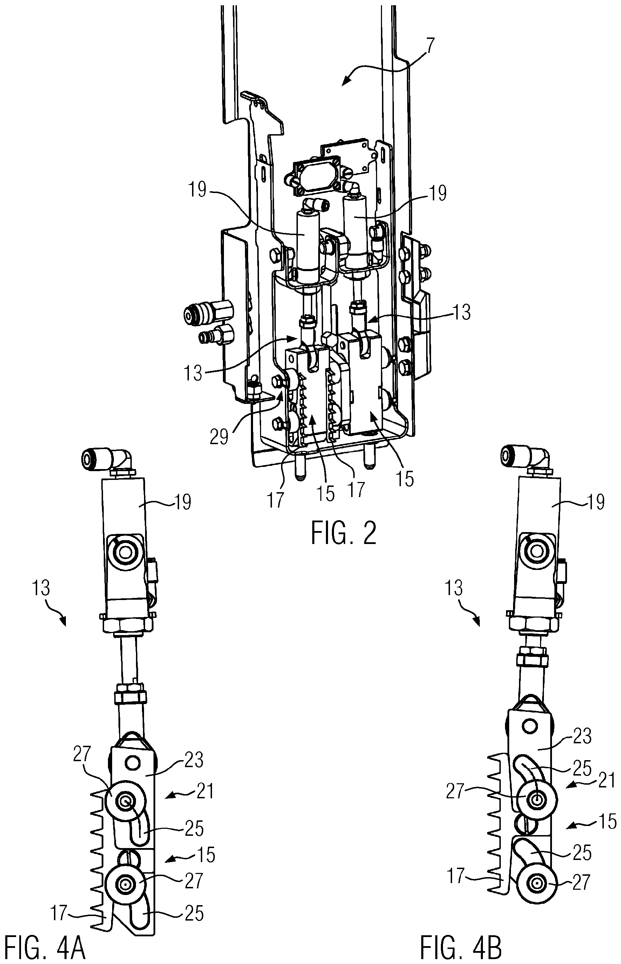

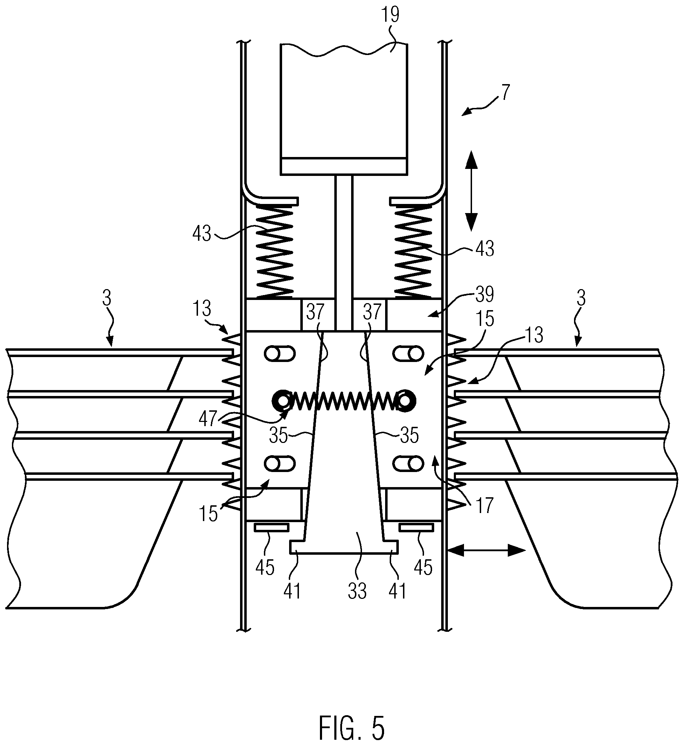

Damit der beim Entstapeln durch die jeweilige Trenneinrichtung 9 aufgrund des Gewichts des entsprechenden Traystapels 3 von oben wirkende Druck, welcher das Entstapeln erschwert, vermindert wird, ist beiden Vertikalführungen 5 jeweils eine Entlastungseinrichtung 13 zugeordnet. Beide Entlastungseinrichtungen 13 sind in platzsparender Art und Weise in der Mittenführung 7 angeordnet. Die Entlastungseinrichtungen 13 umfassen, wie für eine erfindungsgemäße Ausführungsform in Figur 2 und für ein nicht beanspruchtes Beispiel in Figur 5 dargestellt, jeweils ein Halteelement 15 mit einem gezackten Eingriffselement 17, das dazu ausgelegt ist, mit Flanschen der Trays des jeweiligen Traystapels 3 in Eingriff zu kommen. Die Eingriffselemente 17 sind jeweils von der Mittenführung 7 in Richtung auf den zugeordneten Traystapel 3 hin ausgerichtet und können sich durch Schlitze einer Abdeckung der Mittenführung 7 zu dem Traystapel 3 hin erstrecken. Mittels einer ebenfalls in der Mittenführung 7 angeordneten Antriebseinrichtung 19 sind die Halteelemente 15 jeweils zwischen einer Halteposition und einer Freigabeposition verfahrbar.

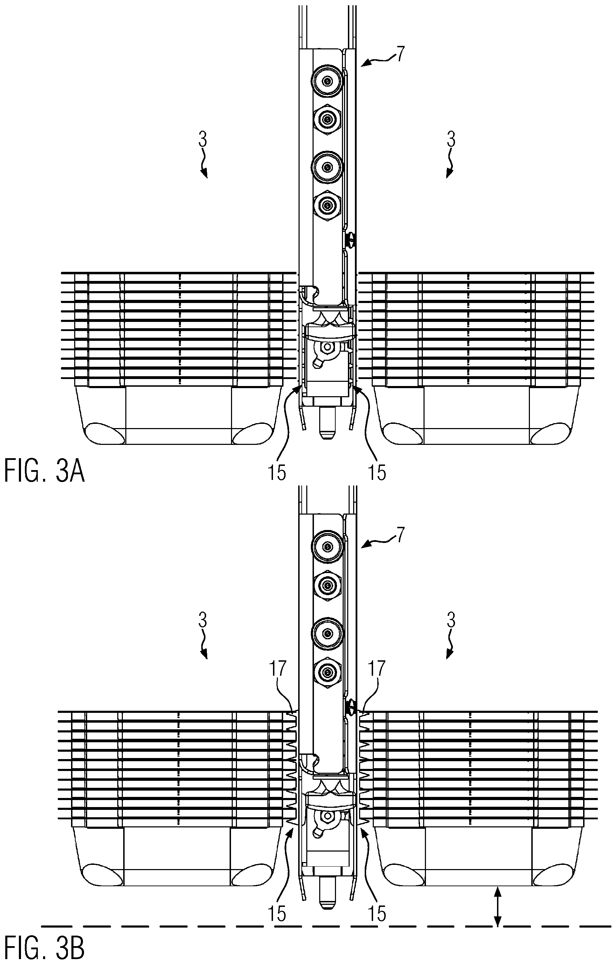

Fig. 3A zeigt in schematischer Ansicht von vorne auf die Mittenführung 7 den Freigabezustand der Halteelemente 15 und Fig. 3B zeigt in gleicher Ansicht die Halteposition der Halteelemente 15. In der in Fig. 3A dargestellten Freigabeposition sind die Halteelemente 15 derart in die Mittenführung 7 zurückgezogen, dass die Eingriffselemente 17 der Halteelemente 15 nicht mit dem jeweiligen Traystapel 3 in Kontakt kommen. Es ist denkbar, aber nicht notwendig, dass die Halteelemente 15 vollständig in die Mittenführung 7 zurückgezogen sind. Beim Verfahren von der Freigabeposition in die Halteposition (in Figur 3B dargestellt) werden die Halteelemente 15 seitlich aus der Mittenführung 7 ausgefahren und kommen mit Flanschen des jeweiligen Traystapels 3 in Eingriff. Zudem werden die Halteelemente 15 vertikal nach oben bewegt, so dass die an den Flanschen gehaltenen Trays angehoben werden. So wird durch Anheben eines oberen Teils des Traystapels 3 der darunterliegende Teil des Traystapels (in den Fig. 3A und 3B nicht dargestellt) entlastet und lässt sich so von den Trenneinrichtungen 9 leichter abstapeln.

In Fig. 2 sind die Entlastungseinrichtungen 13 gemäß einer erfindungsgemäßen Ausführungsform dargestellt, wobei eine Abdeckung der Mittenführung 7 entfernt wurde, um das Innere der Mittenführung 7 sichtbar zu machen. In dieser erfindungsgemäßen Ausführungsform umfasst die Antriebseinrichtung 19 zwei längenveränderliche Elemente, insbesondere Pneumatikzylinder oder Elektrolinearzylinder. Wie aus Fig. 2 ersichtlich, sind diese jeweils schwenkbar mit dem zugeordneten Halteelement 15 verbunden Die längenveränderlichen Elemente der Antriebseinrichtung 19 wirken im Wesentlichen entlang einer vertikalen Richtung auf das jeweilige Halteelement 15 ein und üben auf dieses wahlweise eine Zug- oder Drückkraft aus. Wie aus Fig. 2 ersichtlich, sind die Antriebseinrichtung 19 und die zugeordneten Halteelemente 15 zumindest im Wesentlichen übereinander angeordnet. Diese Anordnung ermöglicht es, die Mittenführung 7 schmal auszubilden, so dass die Traystapel 3 mit einem geringen lateralen Abstand zueinander abgestapelt werden können.

Der Verfahrweg der Halteelemente 15 zwischen der Halteposition und der Freigabeposition ist jeweils durch eine Kulissenführung 21 definiert. Dies ist in den Fig. 4A und 4B für eine der beiden Entlastungseinrichtungen 13 dargestellt. Fig. 4A zeigt die Entlastungseinrichtung 13 in der Freigabeposition und Fig. 4B zeigt die Entlastungseinrichtung 13 in der Halteposition. In einem Hauptkörper 23 des Halteelements 15 sind zwei Kulissen 25 vorgesehen, in denen jeweils ein horizontaler Bolzen 27 aufgenommen ist. Die Kulissen 25 können insbesondere als Schlitze ausgebildet sein. Die horizontalen Bolzen 27 sind an einem Gestell 29 der Mittenführung 7 befestigt (siehe Fig. 2). In der dargestellten Ausführungsform ist das Gestell 29 ortsfest an der Abstapelvorrichtung 1 vorgesehen. Es wäre aber auch denkbar, dass das Gestell 29 an der Abstapelvorrichtung 1 verschiebbar ist, um die Entlastungseinrichtung 13 in ihrer Gesamtheit verschieben zu können. So könnte die Entlastungseinrichtung 13 an die jeweils abzustapelnden Trays angepasst werden.

Die durch die Kulissen 25 und die Bolzen 27 definierte Kulissenführung 21 definiert den Verfahrweg des Halteelements 15 zwischen der Halteposition und der Freigabeposition. Wenn in der in Fig. 4A gezeigten Freigabeposition die Antriebseinrichtung 19 das Halteelement 15 vertikal nach oben mit einer Zugkraft beaufschlagt, wird aufgrund der Form der Kulissen 25 das Halteelement 15 zunächst vor allem seitlich aus der Mittelführung 7 auf den Traystapel 3 zu ausgefahren. Das Halteelement 15 wird also auf eine Mittelachse der entsprechenden Vertikalführung 5 zu bewegt. Um eine möglichst flüssige Führung des Halteelements 15 zu erreichen, umfasst auch das Ausfahren des Halteelements 15 bereits ein leichtes Anheben des Halteelements 15. Nachdem das Halteelement 15 ausreichend weit ausgefahren wurde, geht die Bewegung des Halteelements 15 aufgrund der Ausgestaltung der Kulissenführung 21 in eine vornehmlich vertikal nach oben gerichtete Bewegung zum Anheben eines oberen Teils des Traystapels 3 über. Fig. 4B zeigt die Halteposition des Halteelements 15 in der das längenveränderliche Element der Antriebseinrichtung 19 maximal verkürzt ist. Durch erneutes Nach-Unten-Drücken des Halteelements 15 durch die Antriebseinrichtung 19 lässt sich das Halteelement 15 wieder in die Freigabeposition bringen.

Es wäre auch denkbar, dass die Bolzen 27 der Kulissenführung 21 an dem Halteelement 15 ausgebildet oder befestigt sind und die Kulissen 25 an dem Gestell 29 der Abstapelvorrichtung 1 ausgebildet sind.

Fig. 5 zeigt in schematischer Frontansicht auf die Mittenführung 7 eine Ausführung der Entlastungseinrichtungen 13 gemäß eines nicht beanspruchten Beispiels. Gemäß dieser Variante ist der Verfahrweg der Halteelemente 15 zwischen der Halteposition und der Freigabeposition durch eine Keilführung 31 anstatt durch eine Kulissenführung 21 definiert. Die Keilführung 31 ist so ausgebildet, dass ebenfalls die in den Fig. 3A und 3B dargestellte Freigabeposition und Halteposition erreicht werden. Gemäß Fig. 5 sind die Halteelemente 15 auf gegenüberliegenden Seiten der Mittenführung 7 angeordnet, so dass ihre Eingriffselemente 17 jeweils unterschiedlichen Tray-stapeln 3 zugewandt sind. Zwischen den Halteelementen 15 ist ein Keilelement 33 vorgesehen. Das Keilelement 33 weist jeweils auf der einem Halteelement 15 zugewandten Seite eine gegenüber einer vertikalen Richtung geneigte Keilfläche 35 auf. Die Halteelemente 15 umfassen jeweils eine zu der entsprechenden Keilfläche 35 parallel verlaufende, ebenfalls gegenüber der vertikalen Richtung geneigte Eingriffsfläche 37. Die Keilflächen 35 und die korrespondierenden Eingriffsflächen 37 sind in gleitendem Eingriff. Entlang der vertikalen Richtung von unten nach oben gesehen sind sowohl die Keilflächen 35 als auch die Eingriffsflächen 37 auf eine Mittelachse der Mittenführung 7 hin nach innen zu geneigt. Das Keilelement 33 ist mit der Antriebseinrichtung 19 verbunden, welche lediglich ein längenveränderliches Element, insbesondere einen Pneumatikzylinder oder Elektrolinearzylinder, zum gemeinsamen Antreiben beider Entlastungseinrichtungen 13 umfasst. Die Antriebseinrichtung 19 ist dazu ausgelegt, das Keilelement 33 entlang der vertikalen Richtung nach oben zu ziehen bzw. nach unten zu drücken. Fig. 5 zeigt die Entlastungseinrichtungen 13 in der Freigabeposition. Wird das Keilelement 33 aus dieser Situation heraus durch die Antriebseinrichtung 19 nach oben gezogen, werden die Halteelemente 15 aufgrund des gleitenden Eingriffs der Keilflächen 35 mit den Eingriffsflächen 37 in Richtung auf den jeweiligen Traystapel 3 zu bewegt, also aus der Mittenführung 7 ausgefahren. Für diese horizontale Ausfahrbewegung sind die Halteelemente 15 in einem Schlitten 39 geführt. Der Schlitten 39 wiederum ist in der Mittenführung 7 für eine Bewegung entlang der vertikalen Richtung geführt. Sind die Halteelemente 15 vollständig ausgefahren, kommt ein Anschlag 41 des Keilelements 33 mit dem Schlitten 39 in Kontakt und zieht den Schlitten 39 mit den darin geführten Halteelementen 15 entgegen einer von Vorspannelementen 43 bereitgestellten Vorspannung in der Mittenführung 7 nach oben. Hierdurch wird ein oberer Teil des Traystapels 3 angehoben.

Wenn die Halteelemente 15 wieder in die Freigabeposition verbracht werden sollen, bewegt die Antriebseinrichtung 19 das Keilelement 33 wieder nach unten. Der Schlitten 39 mit den darin geführten Halteelementen 15 folgt dieser Bewegung aufgrund der Vorspannung durch die Vorspannelemente 43, bis eine durch einen Anschlag 45 definierte untere Endposition des Schlittens 39 erreicht ist. Nachdem der Schlitten 39 die untere Endposition erreicht hat, wird das Keilelement 33 noch ein Stück weiter nach unten gefahren, so dass sich die Halteelemente 15 wieder in die Mittenführung 7 zurückziehen können. Hierzu sind die Halteelemente 15 in der gezeigten Ausführungsform mittels eines zweiten Vorspannelements 47 verbunden, so dass sie aufeinander zu beaufschlagt sind. Es wäre aber auch denkbar, die Halteelemente 15 auf eine andere Art und Weise zum Rückzug in die Mittenführung 7 zu beaufschlagen.

In dem in Fig. 5 gezeigten nicht beanspruchten Beispiel werden die beiden Entlastungseinrichtungen 13 für die nebeneinander angeordneten Vertikalführungen 5 der zweispurigen Abstapelvorrichtung 1 von einem gemeinsamen Keilelement 33 und einem gemeinsamen Antriebselement 19 bedient. Es wäre aber auch denkbar, dass zwei separate Entlastungseinrichtungen 13 vorgesehen sind oder in einer einspurigen Abstapelvorrichtung 1 nur eine Entlastungseinrichtung 13 vorhanden ist. Hierzu könnte beispielsweise einfach eines der beiden Halteelemente 15 weggelassen werden und das zweite Vorspannelement 47 zum Vorspannen des verbleibenden Halteelements 15 in die zurückgezogene Position an dem Schlitten 39 angebracht werden. Ersichtlicherweise lässt sich das in Fig. 5 gezeigte nicht beanspruchten Beispiel somit auch auf eine einspurige Abstapelvorrichtung 1 anwenden.

In der in Figur 2 dargestellten Ausführungsform ist das Eingriffselement 17 des Halteelements 15 lösbar an dem Hauptkörper 23 des Halteelements 15 angebracht. Das Eingriffselement 17 ist so leicht austauschbar. Es wäre aber auch denkbar, dass das Eingriffselement 17 integral mit dem Hauptkörper 23 des Halteelements 15 ausgebildet ist, wie dies beispielhaft in Figur 5 gezeigt ist.

Wenn die Halteelemente 15 wieder in die Freigabeposition verbracht werden sollen, bewegt die Antriebseinrichtung 19 das Keilelement 33 wieder nach unten. Der Schlitten 39 mit den darin geführten Halteelementen 15 folgt dieser Bewegung aufgrund der Vorspannung durch die Vorspannelemente 43, bis eine durch einen Anschlag 45 definierte untere Endposition des Schlittens 39 erreicht ist. Nachdem der Schlitten 39 die untere Endposition erreicht hat, wird das Keilelement 33 noch ein Stück weiter nach unten gefahren, so dass sich die Halteelemente 15 wieder in die Mittenführung 7 zurückziehen können. Hierzu sind die Halteelemente 15 in der gezeigten Ausführungsform mittels eines zweiten Vorspannelements 47 verbunden, so dass sie aufeinander zu beaufschlagt sind. Es wäre aber auch denkbar, die Halteelemente 15 auf eine andere Art und Weise zum Rückzug in die Mittenführung 7 zu beaufschlagen.

In der in Fig. 5 gezeigten Ausführungsform werden die beiden Entlastungseinrichtungen 13 für die nebeneinander angeordneten Vertikalführungen 5 der zweispurigen Abstapelvorrichtung 1 von einem gemeinsamen Keilelement 33 und einem gemeinsamen Antriebselement 19 bedient. Es wäre aber auch denkbar, dass zwei separate Entlastungseinrichtungen 13 vorgesehen sind oder in einer einspurigen Abstapelvorrichtung 1 nur eine Entlastungseinrichtung 13 vorhanden ist. Hierzu könnte beispielsweise einfach eines der beiden Halteelemente 15 weggelassen werden und das zweite Vorspannelement 47 zum Vorspannen des verbleibenden Halteelements 15 in die zurückgezogene Position an dem Schlitten 39 angebracht werden. Ersichtlicherweise lässt sich die in Fig. 5 gezeigte Ausführungsform somit auch auf eine einspurige Abstapelvorrichtung 1 anwenden.

In der in Figur 2 dargestellten Ausführungsform ist das Eingriffselement 17 des Halteelements 15 lösbar an dem Hauptkörper 23 des Halteelements 15 angebracht. Das Eingriffselement 17 ist so leicht austauschbar. Es wäre aber auch denkbar, dass das Eingriffselement 17 integral mit dem Hauptkörper 23 des Halteelements 15 ausgebildet ist, wie dies beispielhaft in der Ausführungsform von Figur 5 gezeigt ist.

## Patentansprüche

1. Abstapelvorrichtung (1) zum Abstapeln von Trays aus einem Traystapel (3), umfassend:
eine Vertikalführung (5) zum Aufnehmen eines Traystapels (3);
eine Trenneinrichtung (9), die zum einzelnen Abstapeln des jeweils untersten Trays eines in der Vertikalführung (5) aufgenommenen Traystapels (3) konfiguriert ist; und
eine Entlastungseinrichtung (13) mit einem Halteelement (15) und einer Antriebseinrichtung (19), welche dazu konfiguriert ist, das Halteelement (15) zwischen einer Halteposition, in der das Halteelement (15) einen Teil eines in der Vertikalführung (5) aufgenommen Traystapels (3) hält, und einer Freigabeposition, in der das Halteelement (15) den Traystapel (3) freigibt, zu verfahren,
wobei
der Verfahrweg des Halteelements (15) zwischen der Halteposition und der Freigabeposition durch eine Kulissenführung (21) definiert ist, **dadurch gekennzeichnet, dass** die Antriebsanordnung (19) zur Kraftübertragung auf das Halteelement (15) zum Verfahren des Halteelements (15) schwenkbar mit dem Halteelement (15) verbunden ist,
und
die Kulissenführung (21) zwei Kulissen (25) umfasst, in denen jeweils ein horizontaler Bolzen (27) geführt ist.

2. Abstapelvorrichtung nach Anspruch 1, wobei die Antriebseinrichtung (19) dazu konfiguriert ist, zum Verfahren des Halteelements (15) eine entlang einer zumindest im Wesentlichen vertikalen Richtung wirkende Kraft auf das Halteelement (15) auszuüben.

3. Abstapelvorrichtung nach einem der vorangehenden Ansprüche, wobei die Antriebseinrichtung (19) und das Halteelement (15) übereinander angeordnet sind.

4. Abstapelvorrichtung nach einem der vorangehenden Ansprüche, wobei die Antriebseinrichtung (19) ein sich zumindest im Wesentlichen in einer vertikalen Richtung als Längsrichtung erstreckendes längenveränderliches Element aufweist, welches insbesondere als Pneumatikzylinder oder Elektrolinearzylinder ausgebildet ist.

5. Abstapelvorrichtung nach einem der vorangehenden Ansprüche, wobei die Kulissenführung (21) derart ausgebildet ist, dass der Verfahrweg des Halteelements (15) aus der Freigabeposition in die Halteposition eine Bewegung auf eine vertikale Mittelachse der Vertikalführung (5) hin und eine Bewegung entlang einer vertikalen Richtung nach oben umfasst.

6. Abstapelvorrichtung nach einem der vorangehenden Ansprüche, wobei die Kulissenführung (21) derart ausgebildet ist, dass sich das Halteelement (15) bei einem Verfahren aus der Freigabeposition in die Halteposition zunächst hauptsächlich auf eine vertikale Mittelachse der Vertikalführung (5) hin zubewegt und anschließend hauptsächlich entlang einer vertikalen Richtung nach oben bewegt.

7. Abstapelvorrichtung nach einem der vorangehenden Ansprüche, wobei das Halteelement (15) ein gezacktes oder mit Vorsprüngen versehenes Eingriffselement (17) umfasst, das dazu ausgelegt ist, mit Flanschen der Trays des Traystapels (3) in haltenden Eingriff zu kommen.

8. Abstapelvorrichtung nach Anspruch 7, wobei das Eingriffselement (17) lösbar an einem Hauptkörper (23) des Halteelements (15) angebracht ist.

9. Abstapelvorrichtung nach einem der vorangehenden Ansprüche, wobei die Abstapelvorrichtung (1) als wenigstens zweispurige Abstapelvorrichtung (1) ausgebildet ist, welche zudem umfasst:
eine zweite Vertikalführung (5) zum Aufnehmen eines zweiten Traystapels (3);
eine zweite Trenneinrichtung (9), die zum einzelnen Abstapeln des jeweils untersten Trays eines in der zweiten Vertikalführung (5) aufgenommenen Traystapels (3) konfiguriert ist; und
eine zweite Entlastungseinrichtung (13) mit einem zweiten Halteelement (15), wobei die Antriebseinrichtung (19), dazu konfiguriert ist, das zweite Halteelement (15) zwischen einer Halteposition, in der das zweite Halteelement einen Teil eines in der zweiten Vertikalführung (5) aufgenommen Traystapels (3) hält, und einer Freigabeposition, in der das zweite Halteelement (15) den Traystapel (3) freigibt, zu verfahren, wobei der Verfahrweg des zweiten Halteelements (15) zwischen der Halteposition und der Freigabeposition durch eine zweite Kulissenführung (21) definiert ist.

10. Abstapelvorrichtung nach Anspruch 9, wobei beide Entlastungseinrichtungen (13) in einer Mittenführung (7) angeordnet sind, die jeweils einen Teil beider Vertikalführungen (5) bildet.

## Claims

1. A destacking device (1) for destacking trays from a tray stack (3), comprising:
a vertical guide (5) for receiving a tray stack (3);
separating means (9) configured to individually destack the respective lowermost tray of a tray stack (3) received in the vertical guide (5); and
unloading means (13) including a retaining member (15) and drive means (19) configured to move the retaining member (15) between a retaining position, in which the retaining member (15) retains a portion of a tray stack (3) received in the vertical guide (5), and a release position, in which the retaining member (15) releases the tray stack (3),
wherein the movement path of the retaining member (15) between the retaining position and the release position is defined by a link guide (21),
**characterized in that**
the drive means (19) for transmitting force to the retaining member (15) for moving the retaining member (15) is pivotably connected to the retaining member (15), and
the link guide (21) comprises two slots (25) each guiding a horizontal pin (27) therein.

2. The destacking device according to claim 1, wherein the drive means (19) is configured to exert a force on the retaining member (15) acting along an at least substantially vertical direction for moving the retaining member (15).

3. The destacking device according to any one of the preceding claims, wherein the drive means (19) and the retaining member (15) are arranged on top of each other.

4. The destacking device according to any one of the preceding claims, wherein the drive means (19) comprises a member with variable length extending at least substantially in a vertical direction as a longitudinal direction, wherein said member is configured in particular as a pneumatic cylinder or an electric cylinder.

5. The destacking device according to any one of the preceding claims, wherein the link guide (21) is configured such that the movement path of the retaining member (15) from the release position to the retaining position comprises a movement towards a vertical central axis of the vertical guide (5) and a movement upwards along a vertical direction.

6. The destacking device according to any one of the preceding claims, wherein the link guide (21) is configured such that the retaining member (15) during a movement from the release position to the holding position initially moves substantially towards a vertical central axis of the vertical guide (5) and subsequently moves substantially upwards along a vertical direction.

7. The destacking device according to any one of the preceding claims, wherein the retaining member (15) comprises an engaging member (17) being serrated or provided with protrusions and adapted to retainingly engage flanges of the trays of the tray stack (3).

8. The destacking device according to claim 7, wherein the engaging member (17) is removably attached to a body (23) of the retaining member (15).

9. The destacking device according to any one of the preceding claims, wherein the destacking device (1) is configured as a destacking device (1) having at least two tracks and wherein it further comprises:
a second vertical guide (5) for receiving a second tray stack (3);
second separating means (9) configured to individually destack the respective lowermost tray of a tray stack (3) received in the second vertical guide (5); and
second unloading means (13) with a second retaining member (15), wherein the drive means (19) is configured to move the second retaining member (15) between a retaining position, in which the second retaining member retains a portion of a tray stack (3) received in the second vertical guide (5), and a release position, in which the second retaining member (15) releases the tray stack (3), wherein the movement path of the second retaining member (15) between the retaining position and the release position is defined by a second link guide (21).

10. The destacking device according to claim 9, wherein both unloading means (13) are arranged in a center guide (7) which forms part of both vertical guides (5).

## Revendications

1. Dispositif de désempilage (1) pour désempiler des plateaux à partir d'une pile de plateaux (3), comprenant :
un guide vertical (5) pour recevoir une pile de plateaux (3) ;
un dispositif de séparation (9) qui est configuré pour désempiler individuellement le plateau le plus bas d'une pile de plateaux (3) reçue dans le guide vertical (5) ; et
un dispositif de décharge (13) avec un élément de retenue (15) et un dispositif d'entraînement (19) qui est configuré pour déplacer l'élément de retenue (15) entre une position de retenue dans laquelle l'élément de retenue (15) retient une partie d'une pile de plateaux (3) reçue dans le guide vertical (5) et une position de libération dans laquelle l'élément de retenue (15) libère la pile de plateaux (3),
dans lequel le trajet de déplacement de l'élément de retenue (15) entre la position de retenue et la position de libération est défini par un guide à coulisses (21), **caractérisé en ce que**
le dispositif d'entraînement (19) est relié de manière pivotante à l'élément de retenue (15) pour transmettre une force à l'élément de retenue (15) afin de déplacer l'élément de retenue (15), et
le guide à coulisses (21) comprend deux coulisses (25) dans chacune desquelles est guidé un boulon horizontal (27).

2. Dispositif de désempilage selon la revendication 1, dans lequel le dispositif d'entraînement (19) est configuré pour exercer une force agissant le long d'une direction au moins sensiblement verticale à l'élément de retenue (15) afin de déplacer l'élément de retenue (15).

3. Dispositif de désempilage selon l'une quelconque des revendications précédentes, dans lequel le dispositif d'entraînement (19) et l'élément de retenue (15) sont agencés l'un au-dessus de l'autre.

4. Dispositif de désempilage selon l'une quelconque des revendications précédentes, dans lequel le dispositif d'entraînement (19) présente un élément à longueur variable s'étendant au moins sensiblement dans une direction verticale en tant que direction longitudinale, qui est en particulier réalisé sous la forme d'un vérin pneumatique ou d'un vérin électro-linéaire.

5. Dispositif de désempilage selon l'une quelconque des revendications précédentes, dans lequel le guide à coulisses (21) est réalisé de telle sorte que le trajet de déplacement de l'élément de retenue (15) de la position de libération à la position de retenue comprend un déplacement sur un axe central vertical du guide vertical (5) et un déplacement vers le haut le long d'une direction verticale.

6. Dispositif de désempilage selon l'une quelconque des revendications précédentes, dans lequel le guide à coulisses (21) est réalisé de telle sorte que, pendant un déplacement, l'élément de retenue (15) se déplace de la position de libération à la position de retenue d'abord essentiellement sur un axe central vertical du guide vertical (5), puis se déplace essentiellement vers le haut le long d'une direction verticale.

7. Dispositif de désempilage selon l'une quelconque des revendications précédentes, dans lequel l'élément de retenue (15) comprend un élément de mise en prise dentelé ou muni de saillies (17) qui est conçu pour venir en prise de retenue avec des rebords des plateaux de la pile de plateaux (3).

8. Dispositif de désempilage selon la revendication 7, dans lequel l'élément de mise en prise (17) est monté de manière amovible au niveau d'un corps principal (23) de l'élément de retenue (15).

9. Dispositif de désempilage selon l'une quelconque des revendications précédentes, dans lequel le dispositif de désempilage (1) est réalisé sous la forme d'un dispositif de désempilage (1) à au moins deux voies, comprenant en outre :
un second guide vertical (5) pour recevoir une seconde pile de plateaux (3) ;
un second dispositif de séparation (9) qui est configuré pour désempiler individuellement le plateau le plus bas d'une pile de plateaux (3) reçue dans le second guide vertical (5) ; et
un second dispositif de décharge (13) avec un second élément de retenue (15), dans lequel le dispositif d'entraînement (19) est configuré pour déplacer le second élément de retenue (15) entre une position de retenue dans laquelle le second élément de retenue retient une partie d'une pile de plateaux (3) reçue dans le second guide vertical (5) et une position de libération dans laquelle le second élément de retenue (15) libère la pile de plateaux (3), dans lequel le trajet de déplacement du second élément de retenue (15) entre la position de retenue et la position de libération est défini par un second guide à coulisses (21).

10. Dispositif de désempilage selon la revendication 9, dans lequel les deux dispositifs de décharge (13) sont agencés dans un guide central (7) qui forme respectivement une partie des deux guides verticaux (5).
